(19) Europäisches Patentamt
European Patent Office
Office européen des brevets

(11) Veröffentlichungsnummer: **0 045 721**
**B1**

# (12) EUROPÄISCHE PATENTSCHRIFT

(45) Veröffentlichungstag der Patentschrift: **08.05.85**

(51) Int. Cl.⁴: **C 08 G 73/06**, C 08 K 5/34, C 07 D 403/00

(21) Anmeldenummer: **81810307.9**

(22) Anmeldetag: **27.07.81**

(54) **Piperidylderivate von Triazincopolymeren, Verfahren zu deren Herstellung und solche Derivate enthaltende stabilisierte Zusammensetzung.**

(30) Priorität: **31.07.80 IT 2383280**

(43) Veröffentlichungstag der Anmeldung: **10.02.82 Patentblatt 82/6**

(45) Bekanntmachung des Hinweises auf die Patenterteilung: **08.05.85 Patentblatt 85/19**

(84) Benannte Vertragsstaaten: **BE CH DE FR GB IT LI NL**

(56) Entgegenhaltungen:
**EP - A - 0 013 665**
**DE - A - 2 636 130**
**DE - A - 2 719 131**
**DE - A - 2 752 740**
**FR - A - 2 333 821**

**Die Akte enthält technische Angaben, die nach dem Eingang der Anmeldung eingereicht wurden und die nicht in dieser Patentschrift enthalten sind.**

(73) Patentinhaber: **CIBA-GEIGY S.p.A., Strada Statale 233-Km. 20,5, Origgio (IT)**

(72) Erfinder: **Cantatore, Giuseppe, Dr., Via Lido, 112, Casalecchio di Reno,(Bologna) (IT)**

(74) Vertreter: **Stamm, Otto et al, Patentabteilung der CIBA-GEIGY AG Postfach, CH-4002 Basel (CH)**

EP 0 045 721 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Als Lichtstabilisatoren für synthetische Polymere hochwirksame Piperidylderivate von Triazincopolymeren sind bereits bekannt. Insbesondere sind Triazinpolymere der allgemeinen Formel

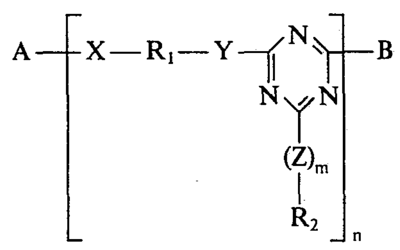

worin X und Y auch Reste der Formel

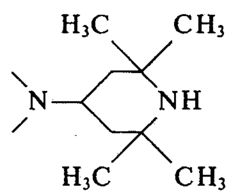

sein können, im US-PS 4 086 204 beschrieben.

Bei der Herstellung dieser Produkte bestehen verschiedene Nachteile, da sich in vielen Fällen neben den erwarteten Produkten beträchtliche Mengen unlöslicher Nebenprodukte im Reaktionsgemisch bilden, welche die Ausbeute erheblich erniedrigen und die Abtrennung und Reinigung des Endprodukts erschweren.

Überraschenderweise wurde nun gefunden, daß bei Verwendung bestimmter Gemische von Reaktionspartnern die obigen Nachteile vollständig vermieden werden und die Ausbeuten an Endprodukt erheblich höher liegen.

Dies stellt einen bemerkenswerten wirtschaftlichen Vorteil dar, da die Ausbeute an lichtstabilisierender Polytriazinverbindung erhöht und das Herstellungsverfahren erheblich vereinfacht wird, weil die Abtrennung und nachfolgende Beseitigung von Nebenprodukten entfällt; ferner ist der Verbrauch an Lösungsmittel niedriger, welches in Gegenwart von Nebenprodukten zum Teil von diesen aufgesogen wird und deshalb schwer zurückzugewinnen ist.

Gegenstand vorliegender Erfindung sind als Licht-, Wärme- und Oxydationsstabilisatoren für synthetische Polymere verwendbare Piperidylderivate von Triazincopolymeren sowie das Verfahren zu deren Herstellung.

Im einzelnen betrifft vorliegende Erfindung Piperidylderivate von Triazincopolymeren der allgemeinen Formel (I)

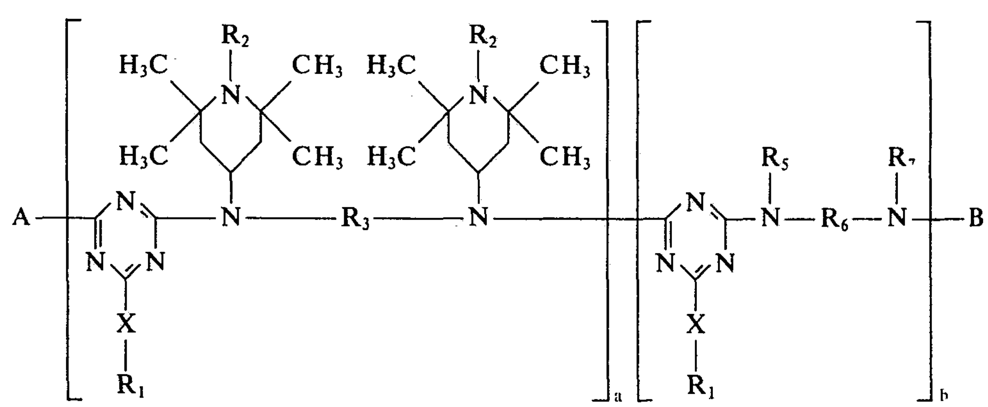 (I)

worin $R_1$ für 2,2,6,6-Tetramethyl-4-piperidyl oder 1,2,2,6,6-Pentamethyl-4-piperidyl, X für $>N-R_9$, worin $R_9$ Wasserstoff oder $C_1-C_8$-Alkyl bedeutet, $R_2$ für Wasserstoff oder Methyl, $R_3$ und $R_6$, die gleich oder verschieden sein können, für $C_2-C_6$-Alkylen, 1,3-Cyclohexylendimethylen oder m-Xylylen, $R_5$ und $R_7$, die gleich oder verschieden sein können, für Wasserstoff, n-Butyl oder Cyclohexyl stehen oder zusammen mit $R_6$ einen Piperazinring bilden, A als Endgruppe Chlor oder einen Rest der Formel IV oder V

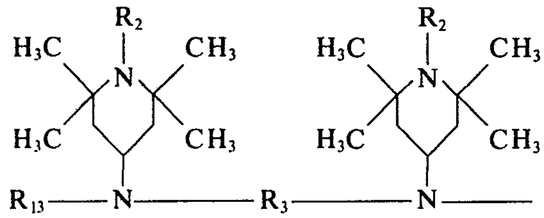

(IV)

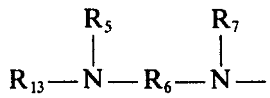

(V)

darstellt, wobei $R_{13}$ ebenso wie B für Wasserstoff, Methyl, Allyl, Benzyl oder Acetyl stehen, und das Molverhältnis a : b 1 : 1 beträgt und das mittlere Molekulargewicht $\overline{M}n$ zwischen 2 000 und 10 000 liegt.

Die Bedeutung der verschiedenen Symbole in der Formel (I) erläuternde Beispiele sind die folgenden:

für $R_3$ und $R_6$: Äthylen, 1,2-Propylen, Trimethylen, 2-Hydroxy-1,3-propylen, Tetramethylen, Pentamethylen, 2,2-Dimethyl-1,3-propylen, Hexamethylen, 1,3-Cyclohexylendimethylen und m-Xylylen;

für $R_9$: Wasserstoff, Methyl, Äthyl, n-Propyl, Isopropyl, n-Butyl, 2-Butyl, Isobutyl, n-Hexyl, n-Octyl oder 2-Äthylhexyl.

Die erfindungsgemäßen neuartigen Verbindungen lassen sich dadurch herstellen, daß man ein Dichlortriazin der Formel (VI)

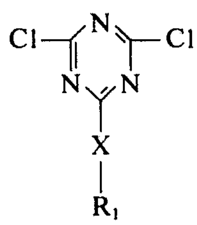

(VI)

mit Diaminen der Formel (VIII) und (IX)

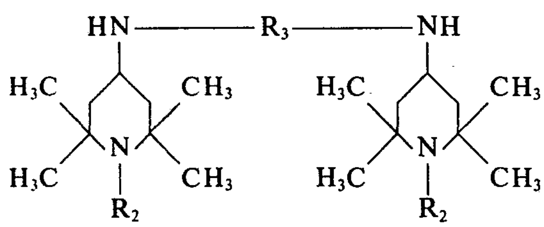

(VIII)

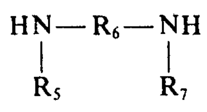

(IX)

in Gegenwart eines inerten Lösungsmittels, vorzugsweise Toluol, Xylol oder Äthylbenzol, und einer organischen oder anorganischen Base, vorzugsweise Natriumhydroxyd oder Kaliumhydroxyd bei einer Temperatur zwischen 40 und 200°C, vorzugsweise zwischen 60 und 180°C, copolymerisiert.

Copolymere der Formel (I) mit regelmäßigem Abwechseln der beiden Reste (X) und (XI)

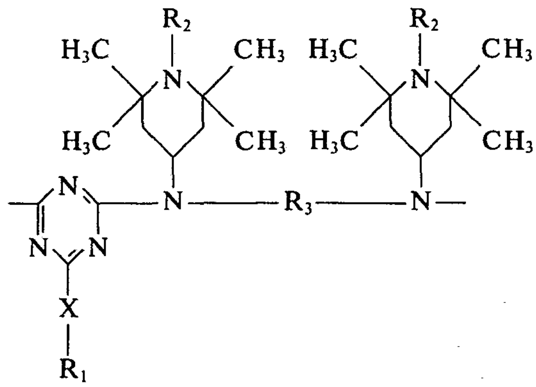

(X)

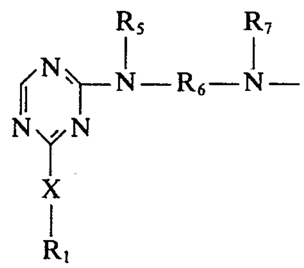

(XI)

kann man herstellen, indem man zunächst das Dichlortriazin mit einem der beiden Reaktionspartner (VIII) oder (IX) bei einer Temperatur zwischen 40 und 100°C, vorzugsweise 60—80°C, im Molverhältnis 1 : 2 umsetzt, um als Zwischenprodukt die Verbindung (XII)

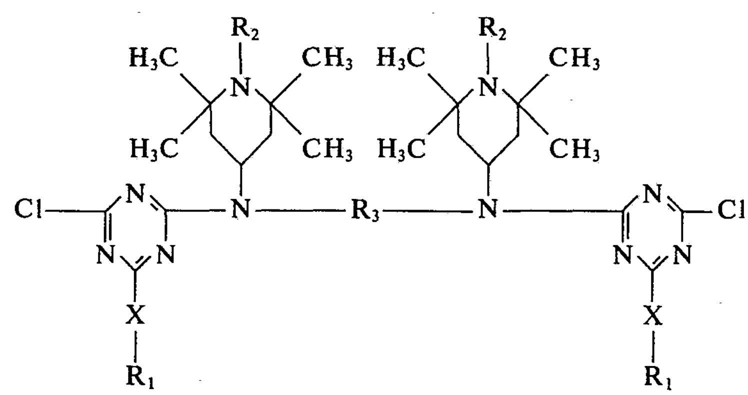

(XII)

oder (XIII)

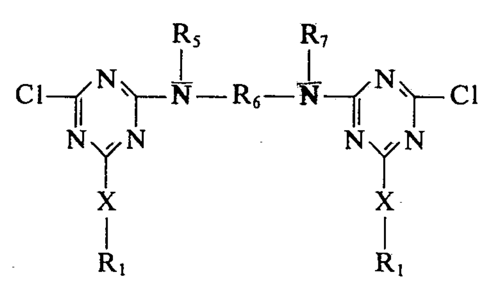

(XIII)

zu bilden, und danach die Umsetzung mit dem zweiten Reaktionspartner bei einer Temperatur zwischen 100 und 200°C, vorzugsweise zwischen 120 und 180°C, zu Ende führt.

Die Verbindungen der Formel (VIII) erhält man durch reduzierende Alkylierung, in Gegenwart von Wasserstoff und einem Hydrierungskatalysator, von Alkylendiaminen der Formel

$$H_2N-R_3-NH_2$$

mit einem Tetramethyl-4-piperidon der Formel

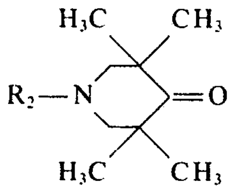

wie im US-PS 3 480 635 beschrieben.

Wie anfangs erwähnt, sind die Verbindungen der Formel (I) sehr wirksam bei der Verbesserung der Licht-, Wärme- und Oxydationsbeständigkeit von synthetischen Polymeren, zum Beispiel Polyolefinen wie Polyäthylen hoher und niedriger Dichte, Polypropylen, Äthylen/Propylencopolymeren oder Äthylen/Vinylacetatcopolymeren, Polybutadien, Polyisopren, Polystyrol, Butadien/Styrolcopolymeren, Acrylnitril/Butadien/Styrolcopolymeren, Polymeren und Copolymeren von Vinylchlorid und Vinylidenchlorid, Polyoxymethylen, Polyurethanen, gesättigten und ungesättigten Polyestern, Polyamiden, Polycarbonaten, Polyacrylaten, Alkydharzen und Epoxidharzen.

Die Verbindungen der Formel (I) können im Gemisch mit den synthetischen Polymeren in verschiedenen Anteilen eingesetzt werden, die von der Art des Polymeren, dem Endzweck und der Gegenwart weiterer Zusatzstoffe abhängen. Im allgemeinen setzt man zweckmäßig 0,01 bis 5 Gew.-% der Verbindungen der Formel (I), bezogen auf das Gewicht der Polymeren, vorzugsweise 0,1 bis 1 %, ein.

Die Verbindungen der Formel (I) können nach verschiedenen Verfahren in die polymeren Materialien eingearbeitet werden, wie durch trockenes Einmischen in Pulverform oder nasses Einmischen in Form einer Lösung oder Suspension oder auch in Form eines konzentrierten Vorgemisches; das synthetische Polymer läßt sich dabei in Form von Pulver, Granulat, Lösung, Suspension oder Emulsion einsetzen. Die mit den Produkten der Formel (I) stabilisierten Polymeren lassen sich zur Herstellung von Formkörpern, Folien, Bändern, Fasern, Endlosfäden, Lacken und dergleichen verwenden.

Gegebenenfalls kann man den Mischungen von Verbindungen der Formel (I) mit den synthetischen Polymeren weitere Zusatzstoffe beigeben, wie beispielsweise Antioxydantien, UV-absorbierende Stoffe, Nickelstabilisatoren, Pigmente, Füllstoffe, Weichmacher, Antistatika, Flammschutzmittel, Schmierstoffe, Korrosionshemmstoffe sowie Metalldesaktivatoren.

Beispiele für in Mischung mit Verbindungen der Formel (I) verwendbare Zusatzstoffe sind insbesondere:

Phenolische Antioxydantien, wie beispielsweise 2,6-Di-t-butyl-p-kresol, 4,4'-Thio-bis-(3-methyl-6-t-butylphenol), 1,1,3-Tris-(2-methyl-4-hydroxy-5-t-butylphenyl)-butan, Octadecyl-3-(3,5-di-t-butyl-4-hydroxyphenyl)-propionat, Pentaerythrit-tetrakis-3-(3,5-di-t-butyl-4-hydroxyphenyl)-propionat, Tris-(3,5-di-t-butyl-4-hydroxybenzyl)-isocyanurat und Tris-(4-t-butyl-3-hydroxy-2,6-dimethylbenzyl)-isocyanurat;

Sekundäre Antioxydantien, wie: Thiodipropionsäureester, beispielsweise Di-n-dodecyl-thiodipropionat und Di-n-octadecyl-thiodipropionat; aliphatische Sulfide und Disulfide, beispielsweise Di-n-dodecylsulfid, Di-n-octadecylsulfid und Di-n-octadecyldisulfid; aliphatische, aromatische und aliphatisch-aromatische Phosphite und Thiophosphite, beispielsweise Tri-n-dodecylphosphit, Tris-(nonylphenyl)-phosphit, Tri-n-dodecyltrithiophosphit, Phenyl-di-n-decylphosphit, Di-n-octadecyl-pentaerythritdiphosphit, Tris-(2,4-di-t-butylphenyl)-phosphit und Tetrakis-(2,4-di-t-butylphenyl)-4,4'-biphenylen-diphosphonit;

UV-absorbierende Stoffe, beispielsweise 2-Hydroxy-4-n-octyloxybenzophenon, 2-Hydroxy-4-n-dodecyloxybenzophenon, 2-(2-Hydroxy-3,5-di-t-butylphenyl)-5-chlorbenztriazol, 2-(2-Hydroxy-3,5-di-t-amylphenyl)-benztriazol, 2,4-Di-t-butylphenyl-3,5-di-t-butyl-4-hydroxybenzoat, Hexadecyl-3,5-di-t-butyl-4-hydroxybenzoat, Phenylsalicylat, p-t-Butylphenylsalicylat, 2-Äthoxy-2'-äthyl-oxanilid, 2-Äthoxy-5-t-butyl-2'-äthyl-oxanilid und 2-Äthoxy-2'-äthyl-5,5'-di-t-butyl-oxanilid.

Lichtstabilisatoren auf Piperidinbasis, beispielsweise 2,2,6,6-Tetramethyl-4-piperidyl-benzoat, Bis-(2,2,6,6-tetramethyl-4-piperidyl)-sebacat, Bis-(1,2,2,6,6-pentamethyl-4-piperidyl)-sebacat und Bis-(1,2,2,6,6-pentamethyl-4-piperidyl)-butyl-3,5-di-t-butyl-4-hydroxy-benzylmalonat;

Lichtstabilisatoren auf Nickelbasis, beispielsweise Ni-monoäthyl-3,5-di-t-butyl-4-hydroxybenzylphosphonat, der Butylaminkomplex des Ni-2,2'-thio-bis-(4-t-octyl-phenolats), Ni-2,2'-thio-bis-(4-t-octylphenol-phenolat), Ni-dibutyldithiocarbamat, Ni-3,5-di-t-butyl-4-hydroxybenzoat und der Ni-Komplex des 2-Hydroxy-4-n-octyloxybenzophenons;

Organozinnstabilisatoren, beispielsweise Dibutylzinn-maleinat, Dibutylzinn-laurat und Dioctylzinnmaleinat;

Acrylester, beispielsweise $\alpha$-Cyano-$\beta,\beta$-diphenyl-acrylsäureäthylester und $\alpha$-Cyano-$\beta$-methyl-p-methoxy-zimtsäuremethylester;

Metallsalze höherer Fettsäuren, beispielsweise Calcium-, Barium-, Cadmium-, Zink-, Blei- und Nickelstearat sowie Calcium-, Cadmium-, Zink- und Bariumlaurat;

Organische und anorganische Pigmente, beispielsweise Colour Index Pigment Yellow 37, Colour Index Pigment Yellow 83, Colour Index Pigment Red 144, Colour Index Pigment Red 48 : 3, Colour Index Pigment Blue 15, Colour Index Pigment Green 7, Titandioxyd, Eisenoxyd und dergleichen.

Wegen ihrer geringen Flüchtigkeit und Migrationstendenz sind die erfindungsgemäßen Verbindungen besonders nützlich als Lichtstabilisatoren für dünne Polyolefinartikel wie Fasern, Bänder und Folien, bei denen während der Herstellung und im Gebrauch durch Verdunstung, Ausblühen oder Extraktion mit Wasser, insbesondere in Gegenwart von Tensiden, ein mehr oder weniger rascher Stabilisatorverlust eintreten kann.

Zum besseren Verständnis der vorliegenden Erfindung seien nun einige Herstellungsbeispiele für Verbindungen der Formel (I) beschrieben; diese Beispiele dienen lediglich zur Erläuterung und stellen in keiner Weise eine Einschränkung dar.

Beispiel 1

Ein Copolymer mit der wiederkehrenden Einheit (XIV)

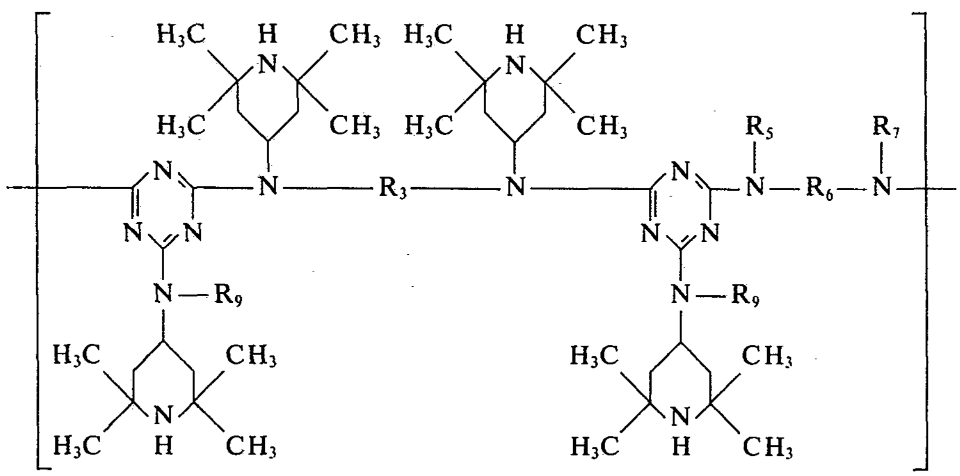

(XIV)

worin $R_3 = -(CH_2)_6-$, $R_5$ und $R_7 = H-$, $R_6 = -(CH_2)_3-$ und $R_9 = n\text{-}C_4H_9$, wird wie folgt hergestellt: man erhitzt 72 g (0,2 Mol) 2,4-Dichlor-6-[N-(2,2,6,6-tetramethyl-4-piperidyl)-butylamino]-1,3,5-triazin, 39,4 g (0,1 Mol) N,N'-Bis-(2,2,6,6-tetramethyl-4-piperidyl)-hexamethylendiamin, 32 g Natriumhydroxyd und 200 ml Xylol 2 Stunden auf 70°C. Dann gibt man 8,9 g (0,12 Mol) Trimethylendiamin dazu und erhitzt 16 Stunden am Rückfluß. Nach Entfernung der anorganischen Produkte und Abdampfen des Lösungsmittels erhält man 102,5 g (97 % der Theorie) eines hellgelben harzigen Produkts mit einem mittleren Molekulargewicht $\overline{Mn}$ von 2850 und einem Schmelzpunkt von 123–7°C.

Beispiele 2–8

Gemäß der im Beispiel 1 beschriebenen Arbeitsweise und unter Verwendung der gleichen Reagenzienverhältnisse werden weitere Triazincopolymere der Formel (XIV) hergestellt.

Die verschiedenen Substituenten und die Eigenschaften der erhaltenen Produkte sind in Tabelle I angeführt.

Tabelle I

| Beispiel | $R_3$ | $R_5$ | $R_6$ | $R_7$ | $R_9$ | $\overline{Mn}$ | Schmelzpunkt |
|---|---|---|---|---|---|---|---|
| 2 | $-(CH_2)_6-$ | H– | $-(CH_2)_6-$ | H– | $n\text{-}C_4H_9-$ | 2360 | 122–128°C |
| 3 | $-(CH_2)_6-$ | 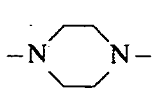 | 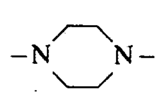 | 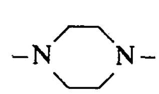 | $n\text{-}C_4H_9-$ | 3180 | 295–305°C |
| 4 | $-(CH_2)_6-$ | $n\text{-}C_4H_9-$ | $-(CH_2)_3-$ | $n\text{-}C_4H_9-$ | $C_2H_5-$ | 3040 | 121–127°C |

Fortsetzung

| Beispiel | $R_3$ | $R_5$ | $R_6$ | $R_7$ | $R_9$ | $\overline{Mn}$ | Schmelzpunkt |
|---|---|---|---|---|---|---|---|
| 6 | $-(CH_2)_3-$ | H– | $-(CH_2)_6-$ | H– | $n\text{-}C_4H_9-$ | 2700 | 139–147°C |
| 7 | $-(CH_2)_3-$ | 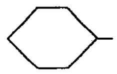 | $-(CH_2)_2-$ | 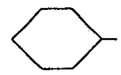 | $C_2H_5-$ | 2330 | 201–208°C |
| 8 | $-(CH_2)_2-$ | H– | $-(CH_2)_6-$ | H– | $n\text{-}C_4H_9-$ | 3400 | 143–149°C |

Beispiel 9

Man erhitzt 83,2 g (0,2 Mol) 2,4-Dichlor-6-[N-(2,2,6,6-tetramethyl-4-piperidyl)-octylamino]-1,3,5-triazin, 33,8 g (0,1 Mol) N,N'-Bis-(2,2,6,6-tetramethyl-4-piperidyl)-äthylendiamin, 32 g Natriumhydroxyd und 200 ml Xylol 2 Stunden auf 70°C. Man gibt 12,8 g (0,11 Mol) Hexamethylendiamin dazu und erhitzt 16 Stunden am Rückfluß. Nach Entfernung der anorganischen Produkte und Abdampfen des Lösungsmittels erhält man 110 g (95,5% der Theorie) eines hellgelben harzigen Produkts mit einem mittleren Molekulargewicht $\overline{Mn}$ von 3960 und einem Schmelzpunkt von 129–35°C.

Beispiele 10–15

Gemäß der in Beispiel 9 beschriebenen Arbeitsweise und unter Verwendung der gleichen Reagenzienverhältnisse werden weitere Triazincopolymere der Formel (XIV) hergestellt.

Die verschiedenen Substituenten und die Eigenschaften der erhaltenen Produkte sind in Tabelle II angeführt.

Tabelle II

| Beispiel | $R_3$ | $R_5$ | $R_6$ | $R_7$ | $R_9$ | $\overline{Mn}$ | Schmelzpunkt |
|---|---|---|---|---|---|---|---|
| 10 | $-(CH_2)_2-$ | 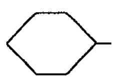 | $-(CH_2)_3-$ | H– | $C_2H_5-$ | 3550 | 120–125°C |
| 11 | $-(CH_2)_3-$ | H– | $-(CH_2)_3-$ | H– | $n\text{-}C_4H_9-$ | 3330 | 168–179°C |
| 12 | $-(CH_2)_3-$ | H– | $-CH_2-$ 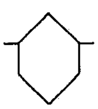 $-CH_2-$ | H– | $C_2H_5-$ | 3740 | 163–171°C |
| 13 | $-(CH_2)_3-$ | H– | $-CH_2-$ 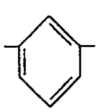 $-CH_2-$ | H– | $n\text{-}C_4H_9-$ | 3960 | 160–168°C |
| 14 | $-(CH_2)_6-$ | H– | $-(CH_2)_6-$ | H– | H– | 3190 | 109–116°C |

Beispiel 16

Man erhitzt 83 g (0,25 Mol) 2,4-Dichlor-6-[N-(2,2,6,6-tetramethyl-4-piperidyl)-äthylamino]-1,3,5-triazin, 78,8 g (0,2 Mol) N,N'-Bis-(2,2,6,6-tetramethyl-4-piperidyl)-hexamethylendiamin, 8,7 g (0,075 Mol) Hexamethylendiamin, 40 g Natriumhydroxyd und 250 ml Xylol 2 Stunden auf 70°C und 16 Stunden am Rückfluß.

Nach Entfernung der anorganischen Produkte und Abdampfen des Lösungsmittels erhält man 147 g (96,5% der Theorie) eines hellgelben harzigen Produkts mit einem mittleren Molekulargewicht $\overline{Mn}$ von 3560 und einem Schmelzpunkt von 117–22°C.

Beispiel 17

Ein an den NH-Gruppen methyliertes Copolymer nach Beispiel 1 wird auf folgende Weise hergestellt: man erhitzt 50 g des gemäß Beispiel 1 hergestellten Copolymeren, 28 g 88 %ige Ameisensäure, 41 g 37 %igen Formaldehyd und 50 ml Wasser 12 Stunden am Rückfluß.

Nach dem Abkühlen verdünnt man das Reaktionsgemisch mit 200 ml Wasser und versetzt mit einer Lösung von 30 g Natriumhydroxyd in 500 ml Wasser. Der erhaltene Niederschlag wird abfiltriert, mit Wasser auf neutralen pH gewaschen und getrocknet.

Man erhält 54 g eines hellfarbigen Produkts, das bei 178–183°C schmilzt und ein mittleres Molekulargewicht $\overline{M}n$ von 2970 aufweist.

Beispiel 19

Man erhitzt 66,4 g (0,2 Mol) 2,4-Dichlor-6-[N-(2,2,6,6-tetramethyl-4-piperidyl)-äthylamino]-1,3,5-triazin, 39,4 g (0,1 Mol) N,N'-Bis-(2,2,6,6,-tetramethyl-4-piperidyl)-hexamethylendiamin, 8,4 g Natriumhydroxyd und 200 ml Xylol 4 Stunden auf 60°C. Dann versetzt man mit 12,8 g (0,11 Mol) Hexamethylendiamin und 16 g Natriumhydroxyd und erhitzt das Gemisch 16 Stunden am Rückfluß.

Nach Entfernung der anorganischen Produkte und Abdampfen des Lösungsmittels erhält man 102 g (98 % der Theorie) eines hellgelben harzigen Produkts mit einem mittleren Molekulargewicht $\overline{M}n$ von 3510 und einem Schmelzpunkt von 149–54°C.

Beispiel 21

Man erhitzt 126 g (0,35 Mol) 2,4-Dichlor-6-[N-(2,2,6,6-tetramethyl-4-piperidyl)-n-butylamino]-1,3,5-triazin, 33,3 g (0,15 Mol) 2,4-Dichlor-6-n-butoxy-1,3,5-triazin, 98,5 g (0,25 Mol) N,N'-Bis-(2,2,6,6-tetramethyl-4-piperidyl)-hexamethylendiamin, 34,8 g (0,3 Mol) Hexamethylendiamin, 60 g Natriumhydroxyd und 250 ml Xylol 2 Stunden auf 70°C und 16 Stunden am Rückfluß.

Nach Entfernung der anorganischen Produkte und Abdampfen des Lösungsmittels erhält man 246 g (96 % der Theorie) eines hellgelben harzigen Produkts mit einem mittleren Molekulargewicht $\overline{M}n$ von 2750 und einem Schmelzpunkt von 186–91°C.

Beispiel 23

Zum Vergleich stellt man gemäß der im Beispiel 1 beschriebenen Arbeitsweise die Verbindung aus Beispiel 1 des US-PS 4 086 204 her, wobei man von 0,1 Mol 2,4-Dichlor-6-n-butylamino-1,3,5-triazin und 0,11 Mol N,N'-Bis-(2,2,6,6,-tetramethyl-4-piperidyl)-hexamethylendiamin ausgeht.

Nach Entfernung der anorganischen Produkte und Abdampfen des Lösungsmittels erhält man 46,5 g Polytriazinprodukt: Ausbeute 80 % der Theorie.

Die Wirksamkeit der erfindungsgemäß hergestellten Produkte als Stabilisatoren wird in den nachfolgenden Beispielen veranschaulicht, wo die in den Herstellungsbeispielen erhaltenen Produkte zum Stabilisieren von Polypropylenfasern und -bändern und Folien aus Polyäthylen niedriger und hoher Dichte eingesetzt werden.

Beispiel 24

2,5 g der in Tabelle III angegebenen Verbindung, 0,5 g Pentaerythrit-tetrakis-3-(3,5-di-t-butyl-4-hydroxyphenyl)-propionat (Antioxydans) und 1 g Calciumstearat werden mit 1000 g Polypropylen mit Schmelzindex 13 (Propathene HF 100®, einem Produkt der Imperial Chemical Industries) innig vermischt.

Das Gemisch wird dann bei 200–230°C extrudiert und zu Granulat umgearbeitet, aus dem man durch Schmelzspinnen unter den folgenden Arbeitsbedingungen Fasern erhält:

| | |
|---|---|
| Temperatur des Extruders | 230–250°C |
| Temperatur der Spinndüse | 240°C |
| Streckverhältnis | 1 : 3 |
| Titer | 20 Denier pro Faden. |

Die erhaltenen Fasern werden dann 10 Stunden unter fortwährendem Rühren in eine 80°C heiße wäßrige Lösung eingetaucht, die 0,5 % des handelsüblichen Tensids Dixan® (Produkt der Henkel Italien) enthält, mit destilliertem Wasser gewaschen, getrocknet und auf weißem Karton in einem Weather-Ometer 65 WR (ASTM G 27–70) bei einer Temperatur der schwarzen Tafel von 63°C ausgesetzt. Von

Zeit zu Zeit werden Proben entnommen, an denen man die verbleibende Zugfestigkeit mittels eines Tensometers mit konstanter Geschwindigkeit mißt; danach bestimmt man die zum Halbieren der ursprünglichen Zugfestigkeit erforderliche Aussetzungszeit ($T_{50}$).

Die erhaltenen Ergebnisse sind in der Tabelle III angeführt.

Tabelle III

| Stabilisator | $T_{50}$ (Stunden) |
|---|---|
| Verbindung aus Beispiel 1 | 950 |
| Verbindung aus Beispiel 2 | 970 |
| Verbindung aus Beispiel 4 | 1050 |
| Verbindung aus Beispiel 6 | 920 |
| Verbindung aus Beispiel 7 | 900 |
| Verbindung aus Beispiel 9 | 880 |
| Verbindung aus Beispiel 11 | 860 |

Beispiel 25

Je 2 g einer der in Tabelle IV angegebenen Verbindungen und 0,3 g Octadecyl-3-(3,5-di-t-butyl-4-hydroxyphenyl)-propionat (Antioxydans) werden mit 1000 g Polyäthylen niedriger Dichte mit Schmelzindex 0,6 (Fertene EF 3—2000®, Produkt der Società Montedison) innig vermischt.

Das Gemisch wird dann bei 190°C extrudiert und zu Granulat umgearbeitet, aus dem durch Verpressen 0,2 mm dicke Folien hergestellt und auf weißem Karton in einem Weather-Ometer 65 WR (ASTM G 27—70) bei einer Temperatur der schwarzen Tafel von 63°C ausgesetzt werden.

Man bestimmt die für einen Anstieg von 0,2 % im Carbonylgruppengehalt by 5,85 Mikrometer erforderliche Zeit (T 0,2). Zum Vergleich stellt man Polymerfolien unter denselben Bedingungen, jedoch ohne den Zusatz von Lichtstabilisatoren her.

Tabelle IV

| Stabilisator | T 0,2 (Stunden) |
|---|---|
| Ohne Lichtstabilisator | 750 |
| Verbindung aus Beispiel 1 | 4370 |
| Verbindung aus Beispiel 2 | 4250 |
| Verbindung aus Beispiel 4 | 4790 |
| Verbindung aus Beispiel 6 | 4530 |
| Verbindung aus Beispiel 7 | 4240 |
| Verbindung aus Beispiel 8 | 4690 |
| Verbindung aus Beispiel 10 | 4180 |
| Verbindung aus Beispiel 11 | 3920 |
| Verbindung aus Beispiel 17 | 4270 |

Beispiel 26

Je 2 g der in der Tabelle V angegebenen Verbindungen und 1 g Pentaerythrit-tetrakis-3-(3,5-di-t-butyl-4-hydroxyphenyl)-propionat (Antioxydans) werden mit 1000 g Polypropylen mit Schmelzindex 3 (Propathene HF 22®, Produkt der Imperial Chemical Industries) und 1 g Calciumstearat innig vermischt.

Das erhaltene Gemisch wird dann bei 200—230°C extrudiert und zu Granulat umgearbeitet, aus dem man Bänder mit einer Dicke von 40 μm und einer Breite von 3 mm herstellt. Die Arbeitsbedingungen sind wie folgt:

| | |
|---|---|
| Extrudertemperatur | 230—240°C |
| Kopftemperatur | 240°C |
| Streckverhältnis | 1 : 6 |

Die erhaltenen Bänder werden in einem Weather-Ometer 65 WR (ASTM G 27–70) bei einer Temperatur der schwarzen Tafel von 63°C ausgesetzt. Von Zeit zu Zeit werden Proben entnommen, an denen man die verbleibende Zugfestigkeit mittels eines Tensometers bei konstanter Geschwindigkeit mißt; danach bestimmt man die zum Halbieren der ursprünglichen Zugfestigkeit erforderliche Aussetzungszeit ($T_{50}$).

Die erhaltenen Ergebnisse sind in Tabelle V angegeben.

Tabelle V

| Stabilisator | $T_{50}$ (Stunden) |
|---|---|
| Verbindung aus Beispiel 1 | 1550 |
| Verbindung aus Beispiel 2 | 1440 |
| Verbindung aus Beispiel 4 | 1370 |
| Verbindung aus Beispiel 6 | 1480 |
| Verbindung aus Beispiel 7 | 1280 |
| Verbindung aus Beispiel 8 | 1510 |
| Verbindung aus Beispiel 11 | 1560 |
| Verbindung aus Beispiel 16 | 1700 |
| Verbindung aus Beispiel 17 | 1610 |

Beispiel 27

Je 2 g der in Tabelle VI angegebenen Verbindungen werden mit 1000 g Polyäthylen hoher Dichte mit Schmelzindex 0,4 (Hostalen GF 7660®, Produkt der Hoechst AG), 0,3 g n-Octadecyl-3-(3,5-di-t-butyl-4-hydroxyphenyl)-propionat (Antioxydans) und 1 g Calciumstearat innig vermischt.

Das erhaltene Gemisch wird dann bei einer Temperatur von 190°C extrudiert und zu Granulat umgearbeitet, aus dem man durch Verpressen bei 200°C 0,2 mm dicke Folien herstellt. Die Folien werden in einem Weather-Ometer 65 WR bei einer Temperatur der schwarzen Tafel von 63°C ausgesetzt.

Man bestimmt die für einen Anstieg von 0,1 % im Carbonylgruppengehalt bei 5,85 μm erforderliche Zeit (T 0,1).

Zum Vergleich werden Folien unter denselben Bedingungen, jedoch ohne Zusatz eines Lichtstabilisators hergestellt.

Die erhaltenen Ergebnisse sind in Tabelle VI angeführt.

Tabelle VI

| Stabilisator | T 0,1 (Stunden) |
|---|---|
| Ohne Lichtstabilisator | 350 |
| Verbindung aus Beispiel 1 | 5170 |
| Verbindung aus Beispiel 2 | 4930 |
| Verbindung aus Beispiel 4 | 5540 |
| Verbindung aus Beispiel 6 | 4710 |
| Verbindung aus Beispiel 7 | 5540 |
| Verbindung aus Beispiel 9 | 4020 |
| Verbindung aus Beispiel 11 | 5500 |
| Verbindung aus Beispiel 14 | 3600 |
| Verbindung aus Beispiel 17 | 5210 |

**Patentansprüche**

1. Piperidylderivate von Triazincopolymeren, der Formel

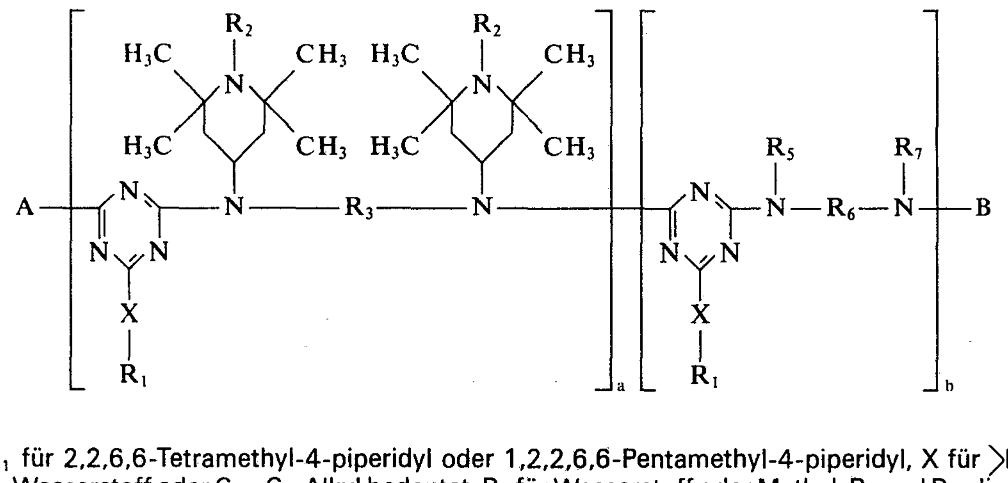

(I)

worin $R_1$ für 2,2,6,6-Tetramethyl-4-piperidyl oder 1,2,2,6,6-Pentamethyl-4-piperidyl, X für $>N-R_9$, worin $R_9$ Wasserstoff oder $C_1-C_8$-Alkyl bedeutet, $R_2$ für Wasserstoff oder Methyl, $R_3$ und $R_6$, die gleich oder verschieden sein können, für $C_2-C_6$-Alkylen, 1,3-Cyclohexylendimethylen oder m-Xylylen, $R_5$ und $R_7$, die gleich oder verschieden sein können, für Wasserstoff, n-Butyl oder Cyclohexyl stehen oder zusammen mit $R_6$ einen Piperazinring bilden, A als Endgruppe Chlor oder einen Rest der Formel IV oder V

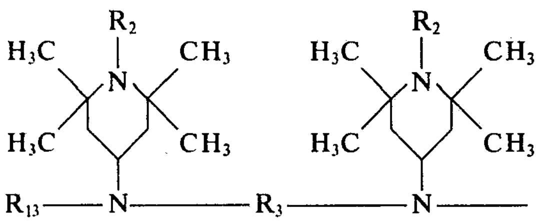

(IV)

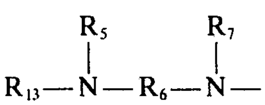

(V)

darstellt, wobei $R_{13}$ ebenso wie B für Wasserstoff, Methyl, Allyl, Benzyl oder Acetyl stehen, und das Molverhältnis a : b 1 : 1 beträgt und das mittlere Molekulargewicht $\overline{M}n$ zwischen 2 000 und 10 000 liegt.

2. Verfahren zur Herstellung von Verbindungen der Formel

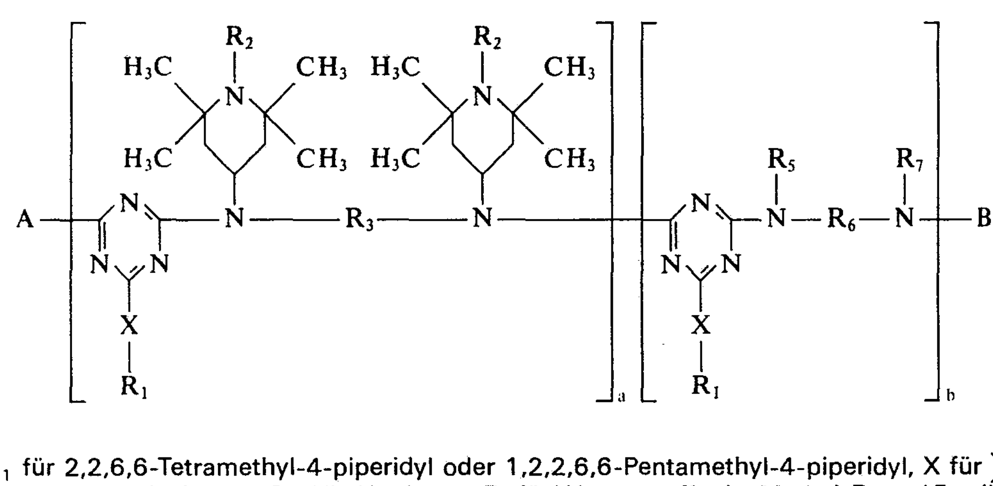

(I)

worin $R_1$ für 2,2,6,6-Tetramethyl-4-piperidyl oder 1,2,2,6,6-Pentamethyl-4-piperidyl, X für $>N-R_9$, worin $R_9$ Wasserstoff oder $C_1-C_8$-Alkyl bedeutet, $R_2$ für Wasserstoff oder Methyl, $R_3$ und $R_6$, die gleich oder verschieden sein können, für $C_2-C_6$-Alkylen, 1,3-Cyclohexylendimethylen oder m-Xylylen, $R_5$ und $R_7$, die gleich oder verschieden sein können, für Wasserstoff, n-Butyl oder Cyclohexyl stehen oder zusammen mit $R_6$ einen Piperazinring bilden, A als Endgruppe Chlor oder einen Rest der Formel IV oder V

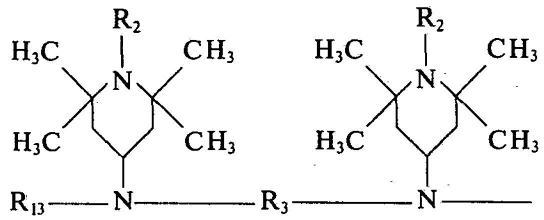

(IV)

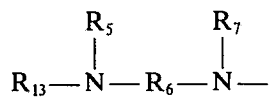

(V)

darstellt, wobei $R_{13}$ ebenso wie B für Wasserstoff, Methyl, Allyl, Benzyl oder Acetyl stehen, und das Molverhältnis a : b 1 : 1 beträgt und das mittlere Molekulargewicht $\overline{M}n$ zwischen 2 000 und 10 000 liegt, dadurch gekennzeichnet, daß man zunächst das Dichlortriazin der Formel (VI)

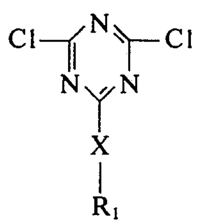

(VI)

mit einem der Diaminen der Formeln (VIII) und (IX)

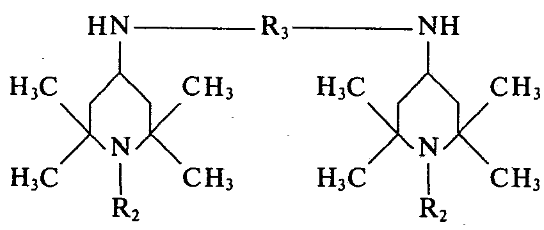

(VIII)

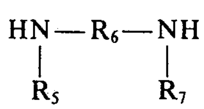

(IX)

bei einer Temperatur zwischen 40 und 100°C im Molverhältnis 1 : 2 umsetzt, um als Zwischenprodukt die Verbindung (XII)

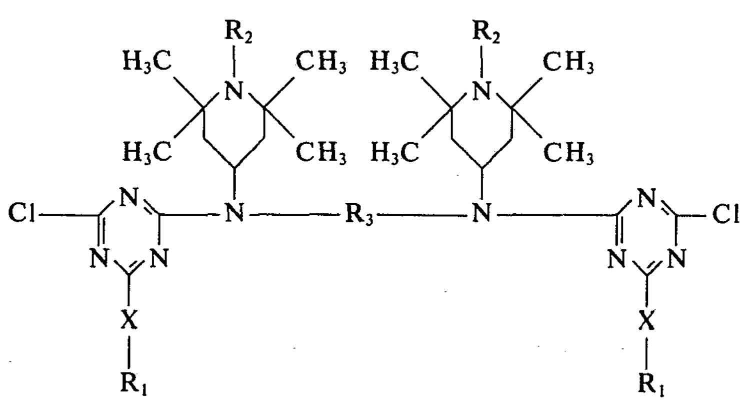

(XII)

oder (XIII)

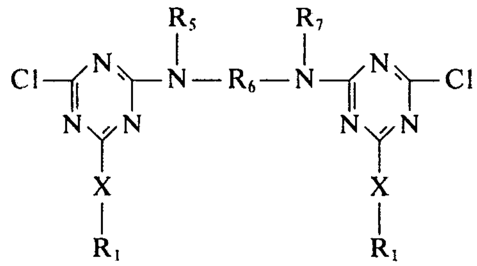

(XIII)

zu bilden, und danach die Umsetzung mit dem zweiten Reaktionspartner bei einer Temperatur zwischen 100 und 200°C zu Ende führt.

3. Verfahren nach Anspruch 2, dadurch gekennzeichnet, daß das inerte organische Lösungsmittel unter Toluol, Xylol und Äthylbenzol ausgewählt und die Base Natriumhydroxyd oder Kaliumhydroxyd ist.

4. Gegen Licht, Wärme und Oxydation stabilisierte Polymerzusammensetzungen, dadurch gekennzeichnet, daß sie aus einem synthetischen Polymeren und einer oder mehreren Stabilisatorverbindungen der Formel (I) in einer Menge von 0,01 bis 5 Gew.-%, bezogen auf das Gewicht des synthetischen Polymeren, bestehen.

5. Zusammensetzungen nach Anspruch 4, dadurch gekennzeichnet, daß sie neben einem Stabilisator der Formel (I) weitere übliche Zusatzstoffe für synthetische Polymere enthalten.

6. Zusammensetzungen nach Anspruch 4, dadurch gekennzeichnet, daß als synthetisches Polymer Polyäthylen oder Polypropylen vorliegt.

7. Zusammensetzungen nach Anspruch 4, dadurch gekennzeichnet, daß das synthetische Polymer in Form von Fasern oder Folien vorliegt.

**Claims**

1. A piperidyl derivative of triazine copolymers of the formula

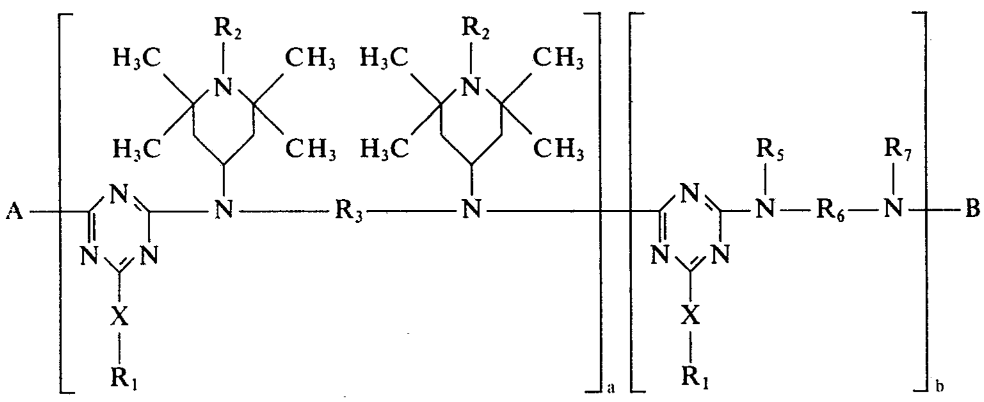

(I)

wherein $R_1$ is 2,2,6,6-tetramethylpiperid-4-yl or 1,2,2,6,6-pentamethylpiperid-4-yl, X is $>N-R_9$, wherein $R_9$ is hydrogen or $C_1-C_8$alkyl, $R_2$ is hydrogen or methyl, $R_3$ and $R_6$, which may be identical or different, are $C_2-C_6$alkylene, 1,3-cyclohexylenedimethylene or m-xylylene, $R_5$ and $R_7$, which may be identical or different, are selected from the group consisting of hydrogen, n-butyl and cyclohexyl or, together with $R_6$, form a piperazine ring, A is an end group and is chlorine or a radical of the formula (IV) or (V)

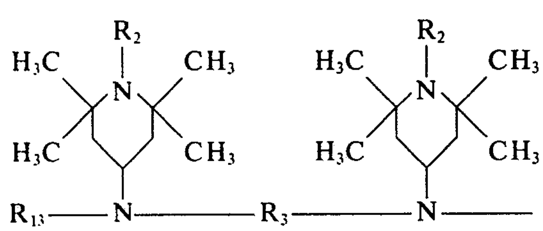

(IV)

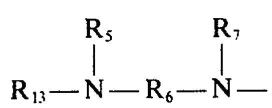

(V)

wherein B and $R_{13}$ are hydrogen, methyl, allyl, benzyl or acetyl, and the molar ratio a : b is 1 : 1 and the average molecular weight $\overline{Mn}$ is in the range from 2 000 to 10 000.

2. A process for the preparation of a compound of the formula

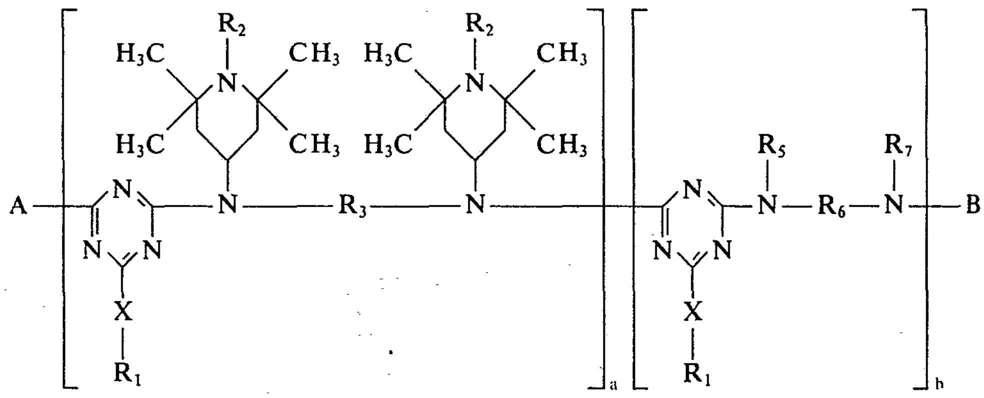

(I)

wherein $R_1$ is 2,2,6,6-tetramethylpiperid-4-yl or 1,2,2,6,6-pentamethylpiperid-4-yl, X is $>N-R_9$, wherein $R_9$ is hydrogen or $C_1-C_8$alkyl, $R_2$ is hydrogen or methyl, $R_3$ and $R_6$, which may be identical or different, are $C_2-C_6$alkylene, 1,3-cyclohexylenedimethylene or m-xylylene, $R_5$ and $R_7$, which may be identical or different, are selected from the group consisting of hydrogen, n-butyl and cyclohexyl or, together with $R_6$, form a piperazine ring, A is an end group and is chlorine or a radical of the formula (IV) or (V)

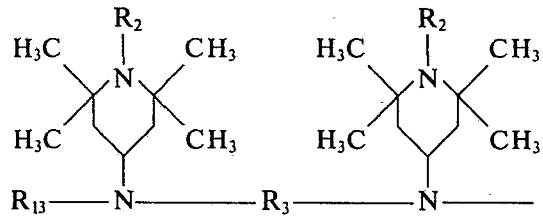

(IV)

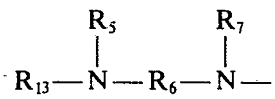

(V)

wherein B and $R_{13}$ are hydrogen, methyl, allyl, benzyl or acetyl, and the molar ratio a : b is 1 : 1 and the average molecular weight $\overline{Mn}$ is in the range from 2 000 to 10 000, which process comprises first reacting the dichlorotriazine of formula (VI)

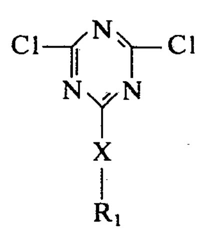

(VI)

with a diamine of formula (VIII) or (IX)

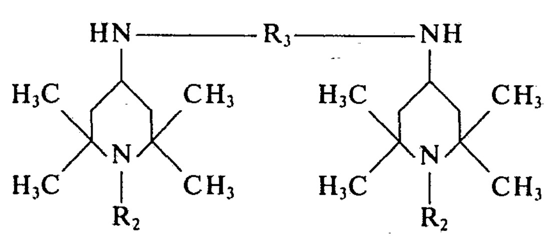

(VIII)

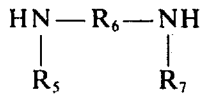

(IX)

in the molar ratio 1 : 2, in the temperature range from 40° to 100°C, to give the intermediate of formula (XII)

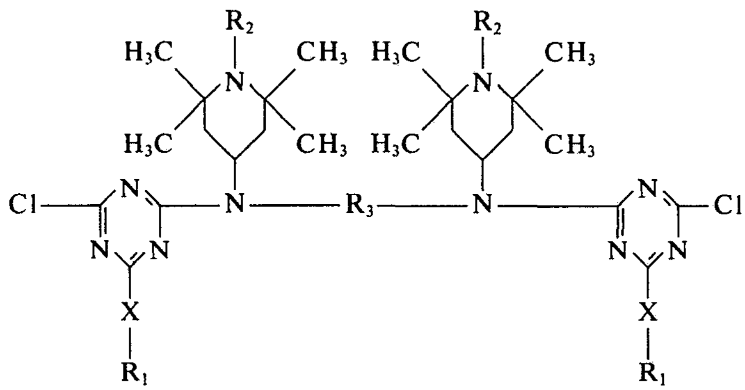

(XII)

or (XIII)

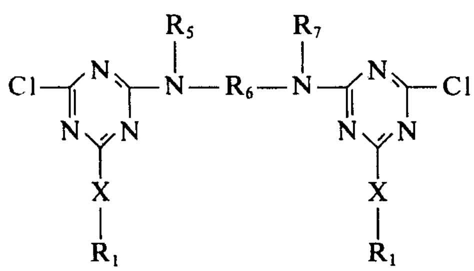

(XIII)

and subsequently bringing the reaction to completion with this second reactant in the temperature range from 100° to 200°C.

3. A process according to claim 2, wherein the inert organic solvent is selected from the group consisting of toluene, xylene and ethylbenzene, and the base is sodium hydroxide or potassium hydroxide.

4. A polymer composition stabilised against light, heat and oxidation, and comprising a synthetic polymer and one or more stabiliser compounds of formula I in an amount from 0.05 to 5 percent by weight, based on the weight of said synthetic polymer.

5. A composition according to claim 4, which contains further conventional additives for synthetic polymers in addition to a stabiliser of formula I.

6. A composition according to claim 4, wherein the synthetic polymer is polyethylene or polypropylene.

7. A composition according to claim 4, wherein the synthetic polymer is in the form of a fibre or film.

**Revendications**

1. Dérivés pipéridyliques de copolymères triaziniques répondant à la formule I:

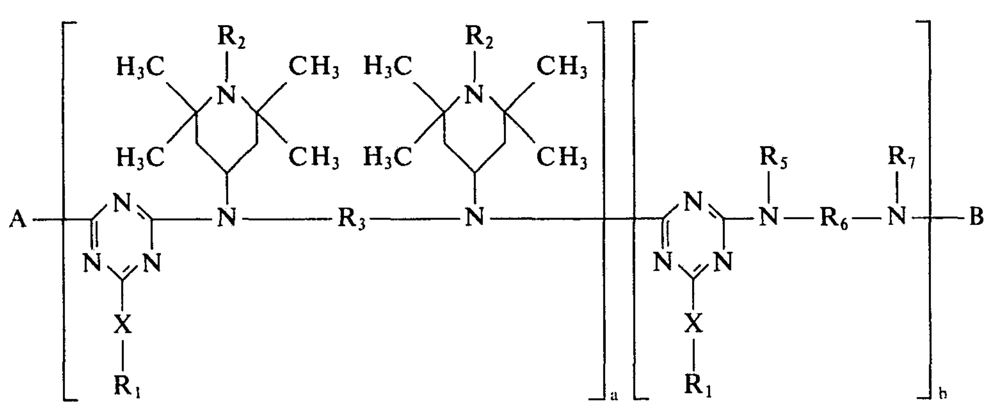

(I)

dans laquelle $R_1$ représente un radical tétraméthyl-2,2,6,6 pipéridyle-4 ou pentaméthyl-1,2,2,6,6 pipéridyle-4, X représente und radical $>N-R_9$, dans lequel $R_9$ désigne l'hydrogène ou un alkyle en $C_1-C_8$, $R_2$ représente l'hydrogène ou un méthyle, $R_3$ et $R_6$, qui peuvent être identiques ou différents, représentent chacun un alkylène en $C_2-C_6$, un cyclohexylène-1,3 diméthylène ou un m-xylylène, $R_5$ et $R_7$, qui peuvent être identiques ou différents, représentent chacun l'hydrogène, un n-butyle ou un cyclohexyle ou forment ensemble et avec $R_6$ un noyau pipérazinique, A représente, en tant que radical terminal, le chlore ou un radical répondant à l'une des formules IV et V:

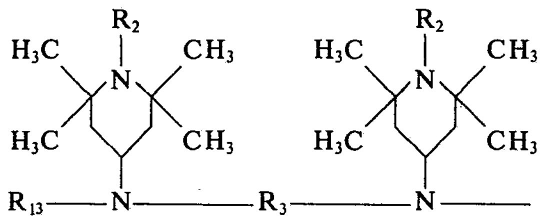

(IV)

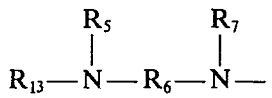

(V)

dans lesquelles $R_{13}$ représente, de même que B, l'hydrogène ou un radical méthyle, allyle, benzyle ou acétyle, et le rapport molaire a : b est égal à 1 : 1, la masse moléculaire moyenne $\bar{M}n$ étant comprise entre 2 000 et 10 000.

2. Procédé de préparation de composés répondant à la formule I:

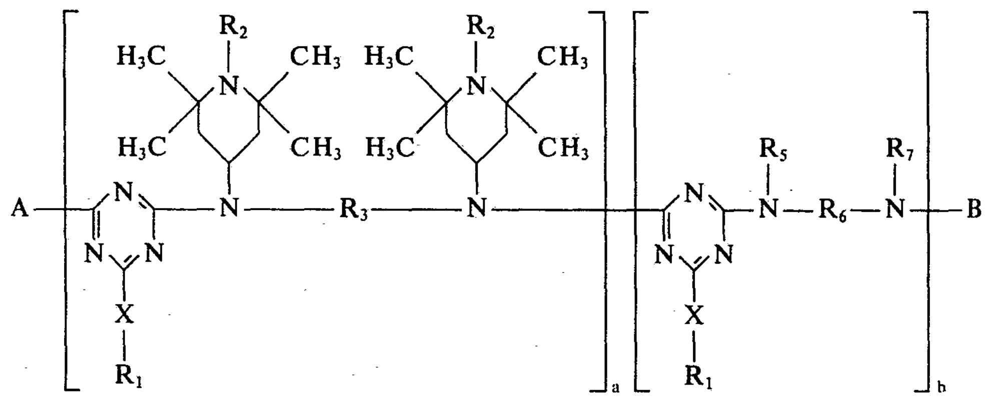

(I)

dans laquelle $R_1$ représente un radical tétraméthyl-2,2,6,6 pipéridyle-4 ou pentaméthyl-1,2,2,6,6 pipéridyle-4, X représente und radical $>N-R_9$, dans lequel $R_9$ désigne l'hydrogène ou un alkyle en $C_1-C_8$, $R_2$ représente l'hydrogène ou un méthyle, $R_3$ et $R_6$, qui peuvent être identiques ou différents, représentent chacun un alkylène en $C_2-C_6$, un cyclohexylène-1,3 diméthylène ou un m-xylylène, $R_5$ et $R_7$, qui peuvent être identiques ou différents, représentent chacun l'hydrogène, un n-butyle ou un cyclohexyle ou forment ensemble et avec $R_6$ un noyau pipérazinique, A représente, en tant que radical terminal, le chlore ou un radical répondant à l'une des formules IV et V:

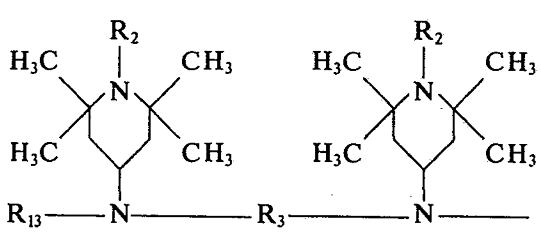

(IV)

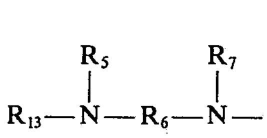

(V)

dans lesquelles $R_{13}$ représente, de même que B, l'hydrogène ou un radical méthyle, allyle, benzyle ou acétyle, et le rapport molaire a : b est égal à 1 : 1, la masse moléculaire moyenne $\overline{M}n$ étant comprise entre 2 000 et 10 000, procédé caractérisé en ce qu'on fait d'abort réagir la dichlorotriazine de formule VI:

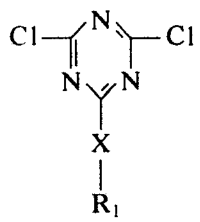

(VI)

avec une des diamines de formules VIII et IX:

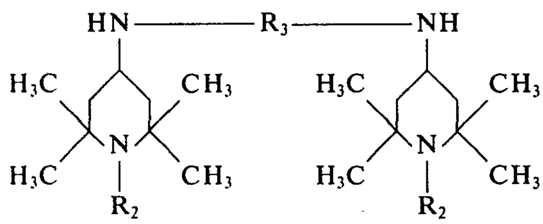

(VIII)

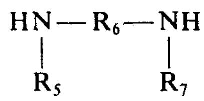

(IX)

à une température comprise entre 40 et 100°C, dans le rapport molaire 1 : 2, pour former, comme corps intermédiaire, le composé de formule XII

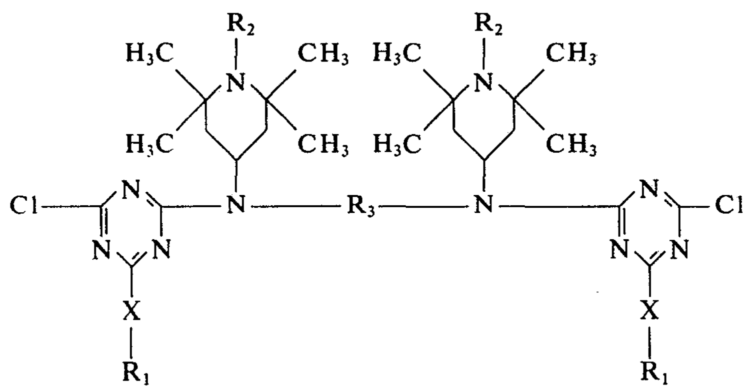

(XII)

ou le composé de formule XIII:

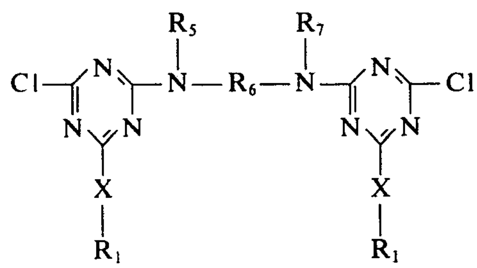

(XIII)

après quoi on achève la réaction avec le deuxième partenaire réactionnel à une température comprise entre 100 et 200°C.

3. Procédé selon la revendication 2 caractérisé en ce que le solvant organique inerte est choisi dans l'ensemble constitué par le toluène, les xylènes et l'éthylbenzène, et la base est l'hydroxyde de sodium ou l'hydroxyde de potassium.

4. Compositions à base de polymères qui ont été stabilisées contre la lumière, la chaleur et l'oxydation, compositions caractérisées en ce qu'elles sont constituées d'un polymère synthétique et d'un ou plusieurs composés stabilisants de formule I en une quantité de 0,01 à 5 % en poids par rapport au poids du polymère synthétique.

5. Compositions selon la revendication 4 caractérisées en ce qu'elles contiennent, en plus d'un stabilisant de formule I, d'autres additifs usuels pour polymères synthétiques.

6. Compositions selon la revendication 4 caractérisées en ce qu'elles contiennent, comme polymère synthétique, du polyéthylène ou du polypropylène.

7. Compositions selon la revendication 4 caractérisées en ce que le polymère synthétique est sous la forme de fibres ou de feuilles.